# EUROPEAN PATENT SPECIFICATION

(11) **EP 2 429 057 B1**
(45) Date of publication and mention of the grant of the patent: **27.05.2015**
(21) Application number: 11180834.1
(22) Date of filing: 10.09.2011
(51) Int. Cl.: H02J 7/00, B60L 3/00, B60L 11/18

(54) **Electrical system of a vehicle with electrical traction**
Elektrisches System eines Fahrzeugs mit elektrischem Antrieb
Système électrique d'un véhicule doté de traction électrique

(30) Priority: 10.09.2010 IT BO20100552
(43) Date of publication of application: 14.03.2012
(73) Proprietor: Magneti Marelli S.p.A., 20011 Corbetta (MI) (IT)
(72) Inventor: Viancino, Riccardo, 10128 Torino (IT)
(74) Representative: Bergadano, Mirko

(56) References cited:
- DE-A1-102008 034 663
- US-A1- 2005 162 015
- US-A1- 2010 079 105

## Description

### TECHNICAL FIELD

The present invention relates to an electrical system of a vehicle with electrical traction.

The present invention is advantageously applied to an electrical system of a hybrid electrical and thermal vehicle, to which explicit reference will be made in the following description without therefore loosing in generality.

### PRIOR ART

The electrical system of a vehicle with hybrid electrical traction comprises at least one electric machine (typically a synchronous alternating current machine) which is reversible (i.e. which can work both as electric motor by absorbing electricity and generating a mechanical motive torque and as electrical generator by absorbing mechanical energy and generating electricity) and mechanically connectable to the drive wheels and is controlled by a bi-directional DC/AC electronic power converter (i.e. an inverter/rectifier). Furthermore, the electrical system of a hybrid traction vehicle comprises a high voltage (and thus high energy) storage system, which consists of a series of chemical lithium batteries, and possibly supercapacitors, and is connected to the DC/AC electronic power converter to exchange electricity with the DC/AC electronic power converter itself (i.e. to supply electricity when the electric machine works as electric motor and receive electricity when the machine works as electric generator). Finally, the electrical system of a vehicle with hybrid traction normally comprises a low voltage (and thus low energy, generally operating at 12 Volt nominal) storage system, which consists of a single chemical lead battery supplying all auxiliary services of the vehicle which require an electrical supply, and is connected to the high voltage storage system by means of a mono-directional or bi-directional electronic DC/DC power converter (which adapts the voltage from the high voltage of the high voltage storage system to the low voltage of the low voltage storage system), which replaces the traditional alternator of thermal only propulsion vehicles. In use, the electronic DC/DC power converter transfers electricity from the high voltage storage system to the low voltage storage system (or, more rarely, vice versa) to supply the auxiliary services and/or to recharge the low voltage storage system.

Normally, the electronic DC/AC power converter which connects the high voltage storage system to the electric machine and the electronic DC/DC power converter which connects the high voltage storage system to the low voltage storage system are housed in a same container and share the same electrical ground. Furthermore, the electronic microprocessor control units of both converters are supplied by the low voltage storage system because obtaining the 5 Volt nominal needed for the electrical supply of the electronic microprocessor control units is easy (i.e. cost-effective) starting from the 12 Volts nominal of the low voltage storage system, while it is complex (i.e. costly) starting from the 400-600 Volts nominal of the high voltage storage system. Consequently, the container which houses the two converters is connected to the low voltage storage system by means of two different electrical cables: the first two-pole electrical cable having large section intended to withstand the high currents (in the order of 200-300 Amperes) needed to supply electricity to the low voltage storage system and/or to the auxiliary systems, and a second two-pole electrical cable having small section intended to withstand the low currents (in the order of a few Amperes) necessary to supply electricity to all the electronic microprocessor control units.

However, it has been observed that in hybrid traction vehicles having an electrical system of the type described above electrical faults may occur which cause the melting of the electrical cable having small section which connects the low voltage storage system to the electronic microprocessor units to supply electricity to the electronic microprocessor control units themselves. Consequently, both electronic microprocessor control units which control the converters stop working due to lack of electricity.

### DESCRIPTION OF THE INVENTION

It is the object of the present invention to provide an electrical system of a vehicle with electrical traction which is free from the drawbacks illustrated above and, in particular, is easy and cost-effective to implement and is very robust.

According to the present invention, an electrical system for a vehicle with electrical traction is provided as disclosed in the appended claims.

### BRIEF DESCRIPTION OF THE DRAWINGS

The present invention will now be described with reference to the accompanying drawings, which illustrate a non-limitative embodiment thereof, in which:
- figure 1 is a diagrammatic view of a hybrid electrical and thermal traction vehicle; and
- figure 2 is a diagrammatic, partial view of an electrical power system of the vehicle in figure 1, made in accordance with the present invention.

### PREFERRED EMBODIMENTS OF THE INVENTION

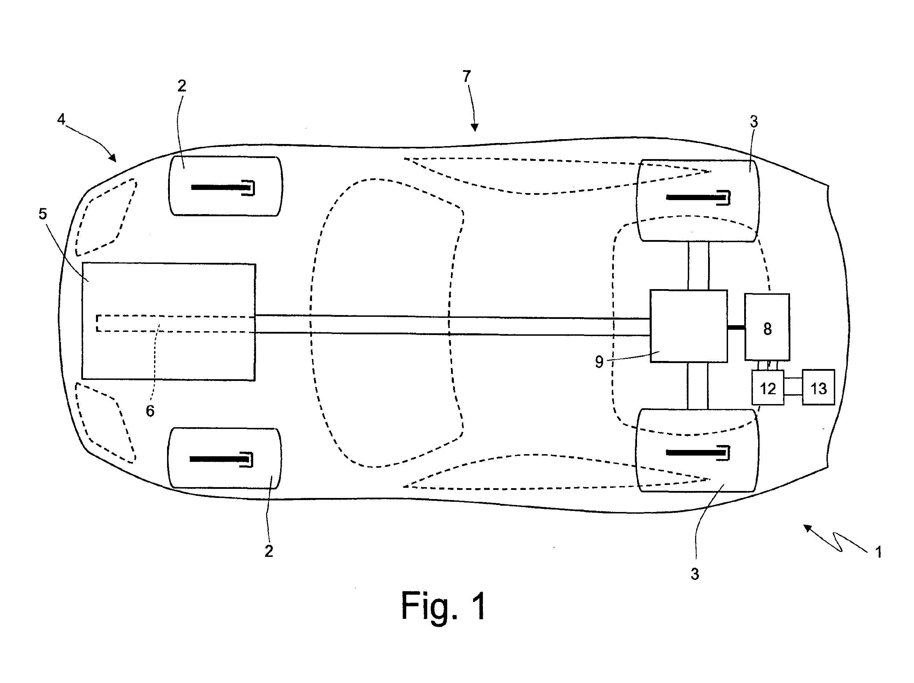

In figure 1, numeral 1 indicates as a whole a road vehicle with hybrid electrical and thermal traction provided with two front wheels 2 and two rear drive wheels 3, which receive torque from a hybrid propulsion system 4.

The hybrid propulsion system 4 comprises an internal combustion engine 5, which is arranged in frontal position and is provided with a drive shaft 6, an automatic manual transmission 7 (commonly named "AMT"), which transmits the torque generated by the internal combustion engine 5 to the rear drive wheels 3, and a reversible electric machine 8 (i.e. an electric machine which can work both as electric motor by absorbing electricity and generating mechanical torque, and as an electric generator by absorbing mechanical energy and generating electricity), which is mechanically connected to the transmission 7 and in particular is mechanically connected to a gearbox 9 arranged in rear position to be connected to the rear drive wheels 3. Preferably, the electric machine 8 is a synchronous machine working with alternating current.

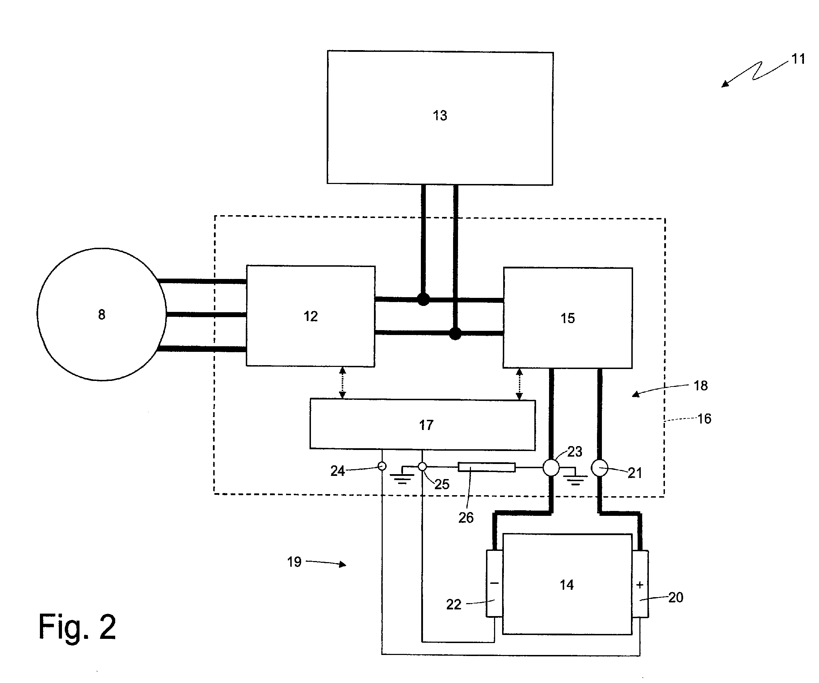

As shown in figure 2, the vehicle 1 comprises an electrical system 11 (only partially shown in figure 2) which comprises an electronic DC/AC power converter (i.e. a DC/AC converter or inverter/rectifier) which controls the electric machine 8. Furthermore, the electrical system 11 comprises a high voltage (and thus high energy) storage system 13, which consists of a series of chemical lithium batteries and possibly supercapacitors and is connected to the electronic power converter 12 to exchange electricity with the electronic power converter 12 itself (i.e. providing electricity when the electric machine 8 works as electric motor and receiving electricity when the electric machine 8 works as electric generator).

The electrical system 11 also comprises a low voltage (and thus low energy, generally operating a 12 Volt nominal) storage system 14 which consists of a single chemical lead battery supplying all auxiliary services of the vehicle 1 which require an electrical supply, and is connected to the high voltage storage system 13 by means of a mono-directional or bi-directional electronic DC/DC power converter 15 (which adapts the voltage from the high voltage of the high voltage storage system 13 to the low voltage of the low voltage storage system 14). The electronic DC/DC power converter 15 replaces the traditional alternator of thermal only propulsion vehicles; in use, the electronic DC/DC power converter 15 transfers electricity from the high voltage storage system 13 to the low voltage storage system 14 (or, more rarely, vice versa) to supply the auxiliary systems and/or to recharge the low voltage storage system 14.

The electronic DC/AC power converter 12 which connects the high voltage storage system 13 to the electrical machine and the electronic DC/DC power converter 15 which connects the high voltage storage system 13 to the low voltage storage system 14 are housed in a same container 16. The common container 16 also houses the electronic microprocessor control units 17 of both converters 12 and 15; the electronic microprocessor control units 17 are diagrammatically illustrated with a single block in figure 2 and in actual fact may be provided with a single piece of hardware which controls both the converters 12 and 15 with two different independent software programs or two independent pieces of hardware having a common electrical supply.

The electronic microprocessor control units 17 of both converters 12 and 15 are supplied by the low voltage storage system 14, because obtaining the 5 Volt nominal needed for electrical supply of the electronic microprocessor control units 17 is easy (i.e. cost-effective) starting from the 12 Volts nominal of the low voltage storage system 14, while it is complex (i.e. costly) starting from the 400-600 Volts nominal of the high voltage storage system 12. Consequently, the container 16 which accommodates the two converters 12 and 15 is connected to the low voltage storage system by means of two different two-pole electrical cables 18 and 19: one two-pole electrical cable 18 having large section intended to withstand the high currents (in the order of 200-300 Amperes) needed to supply electricity to the low voltage storage system 14 and/or to the auxiliary systems and a two-pole electrical cable 19 having small section intended to withstand the low currents (in the order of a few Amperes) necessary to supply electricity to the electronic microprocessor control units 17.

In particular, the two-pole cable 18 having large section connects a positive pole 20 of the low voltage storage system 14 to a positive pole 12 of the electronic DC/DC power converter 15 and connects a negative pole 22 of the low voltage storage system 14 to a negative pole or electrical ground 23 of the DC/DC converter 15. Furthermore, the two-pole cable 19 having small section connects a positive pole 20 of the low voltage storage system 14 to a positive pole 12 of the electronic DC/DC power converter 17 and connects a negative pole 22 of the low voltage storage system 14 to a negative pole or electrical ground 25 of the electronic microprocessor control units 17.

According to an embodiment illustrated in figure 2, the electrical system 11 comprises an interconnection resistor 26 which connects the electrical ground 23 of the electronic DC/DC power converter 15 to the electrical ground 25 of the electronic microprocessor control unit 17. The interconnection resistor 26 has an impedance of value no less than 100 Ohm and, preferably equal to 100 KOhm. The interconnection resistance 26 allows to maintain an electrical connection between the two electrical grounds 23 and 25 and thus simplifies and improves the communication of electrical signals (i.e. of digital information) between the electronic microprocessor control units 17 of the electronic DC/DC power converter components 15.

According to a different embodiment (not shown), the electrical ground 23 of the electronic DC/DC power converter 15 is galvanically insulated from the electrical ground 25 of the electronic microprocessor control units 17 (i.e. between the electrical grounds 23 and 25 there is a theoretically infinite impedance, in actual fact very high at least in the order to MegaOhm).

In use, in case of undesired interruption of the connection between the negative pole 22 of the low voltage storage system 14 and the electrical ground 23 of the electronic DC/DC power converter 15 (e.g. following the partial disconnection or partial breakage of the electrical cable 18 having large section, the electrical current which circulates through the electrical cable 18 having large section is substantially interrupted and does not attempt to close again (if not in minimum part) through the electrical cable 19 having small section by effect of the high impedance existing between the electrical grounds 23 and 25. In other words, by virtue of the high impedance existing between the electrical grounds 23 and 25, in case of undesired interruption of the connection between the negative pole 22 of the low voltage storage system 14 and the electrical ground 23 of the electronic DC/DC power converter 15 the electricity which flows across the electrical cable having large section 18 is substantially interrupted and does not attempt to close (except in minimum part by effect of the limitation of the interconnection resistance 26) through the electrical cable 19 having small section. In this manner, in case of undesired interruption of the connection between negative pole 22 of the low voltage storage system 14 and electrical ground 23 of the electronic DC/DC power converter 15 an additional electrical current strongly limited by the interconnection resistor 26 coming from the electronic DC/DC power converter 15 flows across the electrical cable having small section; thus, the electrical cable 19 having small section is not concerned by additional electrical currents of high intensely and thus is not interrupted in any manner (by melting of material or by intervention of thermal or magnetic protections). Consequently, the functionality of the electronic microprocessor control units 17 is preserved and thus at least the DC/AC power converter 12 may continue to operate normally also in case of undesired interruption of the connection between negative pole 22 of the low voltage storage system 14 and the electrical ground 23 of the DC/DC power converter 15; furthermore, no type of damage occurs but only a temporarily interruption of the operation of the DC/DC power converter 15 which will be fully restored simply by reconnecting the negative pole 22 of the low voltage storage system 14 to the electrical ground 23 of the DC/DC power converter 15.

The above-mentioned electrical system 11 has many advantages.

Firstly, the above describe electrical system 11 is simple and cost-effective to make because it differs from a similar electrical system only for the partial electrical insulation (if the interconnection resistor 26 is used) or total electrical insulation (in case of galvanic insulation) between the electrical grounds 23 and 25.

Furthermore, the above described electrical system 11 allows to preserve the functionality of the electronic microprocessor control units 17 and thus at least of the DC/AC power converter 12 in case of undesired interruption of the connection between negative pole 22 of the low voltage storage system 14 and the electrical ground 23 of the DC/DC power converter 15.

The above described electrical system 11 allows to guarantee the robustness of the DC/DC power converter 15 (in particular guarantees the integrity of the system with different installation on vehicle and wiring connection); such a result is guaranteed by limiting the maximum current which may circulate through the electrical cable 19 having small section in case of problems in the electrical cable 18 having large section.

Finally, in the above descried electrical system 11 the electronic microprocessor control units 17 are immune from the electromagnetic interferences present on the vehicle 1 which may generate currents induced in the two electrical grounds 23 and 25 and damage the printed circuit 17 of the electronic microprocessor control units 17.

It is worth noting that the electrical system described above may be used either in a hybrid electrical and thermal vehicle or in a purely electrical traction vehicle.

## Claims

1. An electrical system (11) of a vehicle (1) with electrical traction provided with a reversible electric machine (8) that can be mechanically connected to drive wheels (3); the electrical system (11) comprises:
an low voltage storage system (14);
a first electronic power converter (15) presenting a positive pole (21) and a negative pole or electrical ground (23) that are connected to the low voltage storage system (14) through a first electrical cable (18) having a large section; and
a first electronic control unit (17) that controls the first electronic power converter (15) and has a positive pole (24) and a negative pole or electrical ground (25) that are connected to the low voltage storage system (14) through a second electrical cable (19) having a small section;
the electrical system (11) is **characterized in that** the electrical ground (23) of the first electronic power converter (15) is connected to the electrical ground (25) of the first electronic control unit (17) only through an impedance having value not lower than 100 Ohm.

2. An electrical system (11) according to claim 1, wherein the electrical ground (23) of the first electronic power converter (15) is connected to the electrical ground (25) of the first electronic control unit (17) only through an impedance having a value of around 100 KOhm.

3. An electrical system (11) according to claim 1 or 2 and comprising an interconnection resistance (26) that connects the electrical ground (23) of the first electronic power converter (15) to the electrical ground (25) of the first electronic control unit (17).

4. An electrical system (11) according to claim 1, wherein the electrical ground (23) of the first electronic power converter (15) is galvanically isolated from the electrical ground (25) of the first electronic control unit (17).

5. An electrical system (11) according to one of the claims from 1 to 4 and comprising:
a second electronic power converter (12), and
a common container (16) housing together the two electronic power converters (15, 12).

6. An electrical system (11) according to claim 5 and comprising a second electronic control unit (17) that controls the second electronic power converter (12) and shares with the first electronic control unit (17) the positive pole (24) and the negative pole or electrical ground (25) that are connected to the low voltage storage system (14) through the second electrical cable (19) having a small section.

7. An electrical system (11) according to claim 5 or 6 and comprising a high voltage storage system (13).

8. An electrical system (11) according to claim 7, wherein the first electronic power converter (15) is a electronic DC/DC power converter that connects the high voltage storage system (13) to the low voltage storage system (14).

9. An electrical system (11) according to claim 7 or 8, wherein the second electronic power converter (12) is a bi-directional converter that connects the electric machine (8) to the high voltage storage system (13).

## Patentansprüche

1. Elektrisches System (11) eines Fahrzeugs (1) mit Elektroantrieb, das mit einer umkehrbaren elektrischen Maschine (8) versehen ist, die mit Antriebsrädern (3) mechanisch verbunden werden kann, welches elektrische System (11) enthält:
ein Niederspannungs-Speichersystem (14);
einen ersten elektronischen Leistungswandler (15), der einen positiven Pol (21) und einen negativen Pol oder elektrische Masse (23) aufweist, die mit dem Niederspannungs-Speichersystem (14) durch ein erstes elektrisches Kabel (18) mit einem großen Querschnitt verbunden sind; und
eine erste elektronische Steuereinheit (17), die den ersten elektronischen Leistungswandler (15) steuert und einen positiven Pol (24) und einen negativen Pol oder elektrische Masse (25) hat, die durch ein zweites elektrisches Kabel (19) mit einem kleinen Querschnitt mit dem Niederspannungs-Speichersystem (14) verbunden sind;
wobei das elektrische System (11) **dadurch gekennzeichnet ist, dass** die elektrische Masse (23) des ersten elektronischen Leistungswandlers (15) mit der elektrischen Masse (25) der ersten elektronischen Steuereinheit (17) nur durch eine Impedanz, die einen Wert von nicht weniger als 100 Ohm hat, verbunden ist.

2. Elektrisches System (11) nach Anspruch 1, wobei die elektrische Masse (23) des ersten elektrischen Leistungswandlers (15) mit der elektrischen Masse (25) der ersten elektronischen Steuereinheit (17) nur durch eine Impedanz verbunden ist, die einen Wert von etwa 100 KOhm hat.

3. Elektrisches System (11) nach Anspruch 1 oder 2 und enthaltend einen Verbindungswiderstand (26), der die elektrische Masse (23) des ersten elektronischen Leistungswandlers (15) mit der elektrischen Masse (25) der ersten elektronischen Steuereinheit (17) verbindet.

4. Elektrisches System (11) nach Anspruch 1, wobei die elektrische Masse (23) des ersten elektronischen Leistungswandlers (15) von der elektrischen Masse (25) der ersten elektronischen Steuereinheit (17) galvanisch isoliert ist.

5. Elektrisches System (11) nach einem der Ansprüche von 1 bis 4 und enthaltend:
einen zweiten elektronischen Leistungswandler (12) und
einen gemeinsamen Behälter (16), in dem die beiden elektronischen Leistungswandler (15, 12) gemeinsam untergebracht sind.

6. Elektrisches System (11) nach Anspruch 5 und enthaltend eine zweite elektronische Steuereinheit (17), die den zweiten elektronischen Leistungswandler (12) steuert und mit der ersten elektronischen Steuereinheit (17) den positiven Pol (24) und den negativen Pol oder die elektrische Masse (25) gemeinsam nutzt, die mit dem Niederspannungs-Speichersystem (14) durch das zweite elektrische Kabel (19) mit einem kleinen Querschnitt verbunden sind.

7. Elektrisches System (11) nach Anspruch 5 oder 6 und enthaltend ein Hochspannungs-Speichersystem (13).

8. Elektrisches System (11) nach Anspruch 7, wobei der erste elektronische Leistungswandler (15) ein elektronischer Gleichstrom-/Gleichstrom-Leistungswandler ist, der das Hochspannungs-Speichersystem (13) mit dem Niederspannungs-Speichersystem (14) verbindet.

9. Elektrisches System (11) nach Anspruch 7 oder 8, wobei der zweite elektronische Leistungswandler (12) ein bidirektionaler Stromrichter ist, der die elektrische Maschine (8) mit dem Hochspannungs-Speichersystem (13) verbindet.

## Revendications

1. Système électrique (11) pour un véhicule (1) à propulsion électrique équipé d'une machine électrique réversible (8) qui peut être reliée mécaniquement à des roues motrices (3) ; le système électrique (11) comprend :
un système d'accumulation à basse tension (14) ;
un premier convertisseur d'énergie électronique (15) présentant un pôle positif (21) et un pôle négatif ou une masse électrique (23), qui sont connectés au système d'accumulation à basse tension (14) par l'intermédiaire d'un premier câble électrique (18) présentant une grande section ; et
une première unité de commande électronique (17) qui commande le premier convertisseur d'énergie électronique (15) et qui présente un pôle positif (24) et un pôle négatif ou une masse électrique (25), qui sont connectés au système d'accumulation à basse tension (14) par l'intermédiaire d'un second câble électrique (19) présentant une petite section ;
le système électrique (11) est **caractérisé en ce que** la masse électrique (23) du premier convertisseur d'énergie électronique (15) est connectée à la masse électrique (25) de la première unité de commande électronique (17) exclusivement par l'intermédiaire d'une impédance ayant une valeur non inférieure à 100 ohms.

2. Système électrique (11) selon la revendication 1, dans lequel la masse électrique (23) du premier convertisseur d'énergie électronique (15) est connectée à la masse électrique (25) de la première unité de commande électronique (17) exclusivement par l'intermédiaire d'une impédance ayant une valeur d'environ 100 kOhms.

3. Système électrique (11) selon la revendication 1 ou 2 et comprenant une résistance d'interconnexion (26) qui connecte la masse électrique (23) du premier convertisseur d'énergie électronique (15) à la masse électrique (25) de la première unité de commande électronique (17).

4. Système électrique (11) selon la revendication 1, dans lequel la masse électrique (23) du premier convertisseur d'énergie électronique (15) est isolée galvaniquement de la masse électrique (25) de la première unité de commande électronique (17).

5. Système électrique (11) selon une des revendications 1 à 4 et comprenant :
un second convertisseur d'énergie électronique (12), et
un conteneur commun (16) qui renferme ensemble les deux convertisseurs d'énergie électroniques (15, 12).

6. Système électronique (11) selon la revendication 5 et comprenant une seconde unité de commande électronique (17) qui commande le second convertisseur d'énergie électronique (12) et qui partage avec la première unité de commande électronique (17) le pôle positif (24) et le pôle négatif ou la masse électrique (25), qui sont connectés au système d'accumulation à basse tension (14) par l'intermédiaire du second câble électrique (19) qui présente une petite section.

7. Système électrique (11) selon la revendication 5 ou 6 et comprenant un système d'accumulation à haute tension (13).

8. Système électrique (11) selon la revendication 7, dans lequel le premier convertisseur d'énergie électronique (15) est un convertisseur d'énergie électronique CC/CC qui connecte le système d'accumulation à haute tension (13) au système d'accumulation à basse tension (14).

9. Système électrique (11) selon la revendication 7 ou 8, dans lequel le second convertisseur d'énergie électronique (12) est un convertisseur bidirectionnel qui connecte la machine électrique (8) au système d'accumulation à haute tension (13).
